(19) Europäisches Patentamt / European Patent Office / Office européen des brevets

(11) **EP 4 765 669 A1**

(12) **EUROPEAN PATENT APPLICATION**

(43) Date of publication:
24.06.2026 Bulletin 2026/26

(51) International Patent Classification (IPC):
*H04B 7/06* (2006.01)

(21) Application number: 25223201.2

(22) Date of filing: **15.12.2025**

(52) Cooperative Patent Classification (CPC):
H04B 7/0617; H04B 7/0456

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.12.2024 FI 20246502**

(71) Applicant: **Nokia Solutions and Networks Oy 02610 Espoo (FI)**

(72) Inventors:
• RYBAKOWSKI, Marcin
  Rawicz (PL)
• BECHTA, Kamil
  Smolec (PL)
• GRANGEAT, Christophe
  Viroflay (FR)
• ZEJNILAGIC, Azra
  Munich (DE)

(74) Representative: **Nokia EPO representatives Nokia Technologies Oy Karakaari 7 02610 Espoo (FI)**

(54) **CONTROLLING ELECTROMAGNETIC FIELD EXPOSURE**

(57) Apparatuses and methods for controlling electromagnetic field exposure are presented. Angular spread of a radio channel is determined (300), where the determined angular spread is configured for use by a transmission point for transmission. Based on the determined angular spread, the beamwidth is selected (302) in at least one of an azimuth or an elevation direction of an antenna arrangement configured for use with the transmission point for transmission of the radio channel.

DETERMINE ANGULAR SPREAD — 300

SELECT BEAMWIDTH — 302

**FIG. 3**

EP 4 765 669 A1

## Description

**Field**

The exemplary and non-limiting embodiments of the invention relate generally to wireless communication systems. Embodiments of the invention relate especially to apparatuses and methods in wireless communication networks.

**Background**

Wireless communication systems are in constant development. New services, applications are developed, new types of technologies are introduced and technologies already in use are developed further. One example of a technology which has been introduce and which is further developed is MIMO (Multiple-Input and Multiple-Output) or Massive MIMO (mMIMO) where more than one antenna element is used for transmission and reception. With MIMO or mMIMO, it is possible to utilize antenna beams directed at the user terminal. In MIMO or mMIMO, antenna arrangements comprise antenna elements of varying numbers, depending on the desired beamwidth. Beamwidth and directions of beams may be controlled by phasing the signal to be transmitted in a suitable manner. The purpose is to deliver enough transmit power to user terminals to enable communication.

Providing a signal with required transmit power to user terminals may be challenging in some environments. Electromagnetic field (EMF) exposure and Equivalent Isotropic Transmitted Power (EIRP) are quantities in radio transmission which may require control to stay within the applicable limit. For example, when antenna arrangements are placed on rooftops, as in a dense urban environment may often be the case, the user terminals served by the antennas may be near the ground, but the EMF exposure levels must also stay within given limits at the rooftop environment accessible to general public or controlled use purpose.

**Summary**

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided apparatus comprising: at least one processor; and at least one memory storing instructions that, when executed by the at least one processor, cause the apparatus at least to: determine angular spread of a radio channel, wherein the determined angular spread is configured for use by a transmission point for transmission; and based on the determined angular spread, select the beamwidth in at least one of an azimuth direction or an elevation direction of an antenna arrangement configured for use with the transmission point for transmission of the radio channel.

According to an aspect of the present invention, there is provided a method performed by a network node in a communication system comprising: determining angular spread of a radio channel, wherein the determined angular spread is configured for use by a transmission point for transmission; and based on the determined angular spread, selecting the beamwidth in at least one of an azimuth direction or an elevation direction of an antenna arrangement configured for use with the transmission point for transmission of the radio channel.

According to an aspect of the present invention, there is provided a computer program comprising instructions, which, when executed by an apparatus, cause the apparatus to perform at least the following: determining angular spread of a radio channel, wherein the determined angular spread is configured for use by a transmission point for transmission; and based on the determined angular spread, selecting the beamwidth in at least one of an azimuth direction or an elevation direction of an antenna arrangement configured for use with the transmission point for transmission of the radio channel.

In an embodiment, there is provided apparatus in a communication system, comprising means for determining angular spread of a radio channel, wherein the determined angular spread is configured for use by a transmission point for transmission; and means for selecting, based on the determined angular spread, the beamwidth in at least one of an azimuth direction or an elevation direction of an antenna arrangement configured for use with the transmission point for transmission of the radio channel.

One or more examples of implementations are set forth in more detail in the accompanying drawings and the description below. Other features will be apparent from the description and drawings, and from the claims. The embodiments and/or examples and features, if any, described in this specification that do not fall under the scope of the independent claims are to be interpreted as examples useful for understanding various embodiments of the invention.

**List of drawings**

Embodiments of the present invention are described below, by way of example only, with reference to the accompanying drawings, in which

Figures 1 and 2 illustrate examples of simplified system architecture of a communication system;
Figures 3 and 4 are flowcharts illustrating some embodiments;
Figure 5 illustrates an embodiment;
Figure 6 illustrates an example of effective antenna gain with different angular spreads;
Figure 7 is a flowchart illustrating an embodiment;
Figures 8A and 8B illustrate examples of beam broadening;
Figure 9 illustrate a simplified example of an apparatus applying some embodiments of the invention.

**Description of some embodiments**

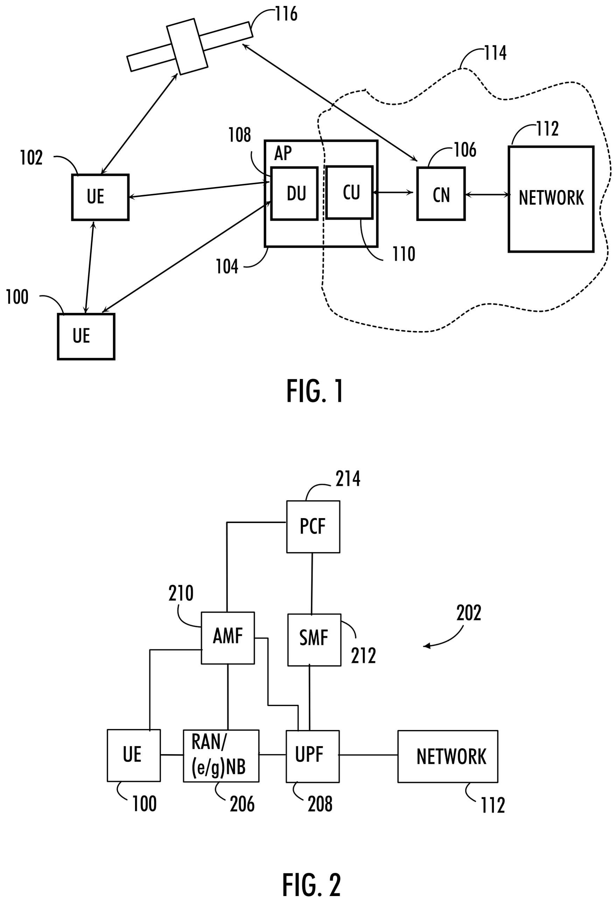

Fig. 1 shows devices 100 and 102. The devices 100 and 102 may, for example, be user devices or user terminals. The devices 100 and 102 are configured to be in a wireless connection on one or more communication channels with a node 104. The node 104 is further connected to a core network 106. In one example, the node 104 may be an access node, such as (e/g)NodeB, serving devices in a cell. In one example, the node 104 may be a non-3GPP access node. The radio link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of the communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements or a plurality of antenna panels each panel being an antenna array. The (e/g)NodeB is further connected to the core network 106 (CN or next generation core NGC).

The device (also called a subscriber unit, user device, user equipment (UE), user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device ( e.g. a portable or non-portable computing device) that includes wireless mobile communication devices operating with or without an universal subscriber identification module (USIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G or NR (New Radio) enables using multiple input - multiple output (MIMO) antennas, many more base stations or nodes than the Long Term Evolution, LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications such as (massive) machine-type communications (mMTC), including vehicular safety, different sensors and real-time control. 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network, or a VoIP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloud RAN architecture enables RAN real time functions being carried out at or close to a remote antenna site (in a distributed unit, DU 108) and non-real time functions being carried out in a centralized manner (in a centralized unit, CU 110).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication 116 to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs may be a Home(e/g)NodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)NodeBs), a home node B gateway, or HNB-GW (not shown in Fig. 1). A HNB Gateway (HNB-GW), which is typically installed within an operator's network may aggregate traffic from a large number of HNBs back to a core network.

Fig.2 illustrates an example of a communication system based on 5G network components. A user terminal or user equipment 100 communicating via a 5G network 202 with a data network 112. The user terminal 100 is connected to a Radio Access Network RAN node, such as (e/g)NodeB 206 which provides the user terminal a connection to the network 112 via one or more User Plane Functions 208. The user terminal 100 is further connected to Core Access and Mobility Management Function, AMF 210, which is a control plane core connector for (radio) access network and can be seen from this perspective as the 5G version of Mobility Management Entity, MME, in LTE. The 5G network further comprises Session Management Function, SMF 212, which is responsible for subscriber sessions, such as session establishment, modify and release, and a Policy Control Function 214 which is configured to govern network behavior by providing policy rules to control plane functions.

The (e/g)NodeB 206 may serve the terminal devices in its coverage area by utilising a beamforming technique, where it transmits signals to the terminal devices via one or more beams. The beams may have at least partly different coverage areas. In an embodiment, a terminal device may receive a signal via more than one beam. Typically, transmission on each beam comprises a beam index. Thus, the terminal device may know which beam it is receiving.

6G networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G will include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

In 5G systems (and other modern systems as well), transmission points located in urban areas may in many cases be located at or on rooftops, walls of buildings, or otherwise mounted on existing infrastructure. Typically, there may be human movement in the vicinity of these locations.

Control of the actual (i.e. time averaged) transmission power or Equivalent Isotropic Radiated Power (EIRP) might be necessary for a mMIMO base station or transmission point if its deployment at a site causes Electromagnetic Field (EMF) exposure to exceed the permissible limits in areas accessible to humans. International standards, such as IEC 62232:2022 for example, outline the procedures for validating base station compliance with EMF exposure limits. Further, adherence to local EMF exposure regulations, like ICNIRP-2020, is required by regulators to certify a site and permit the operator to activate services. For example, when a base station or transmission point is installed on a building rooftop, EMF exposure is assessed both on the rooftop and in the surrounding areas, including neighbouring building rooftops, facades, and street levels below.

In some situations, ensuring that a roof level is safe from EMF exposure may require installing barriers or blockades, which add costs for the operator and restrict roof access. Alternatively, a significant reduction in transmitted power might be necessary, which would affect cell coverage and capacity.

The EMF exposure level depends on the EIRP in specific azimuth and elevation directions, and it can be described with the following equation determined by the transmission power (Ptx) and antenna gain (Gtx):

$$EIRP = Ptx * Gtx. \qquad\qquad (1)$$

Thus, to control EIRP, it is possible either to reduce the transmission power Ptx or the antenna gain Gtx.

Transmission power can be reduced using, for example, techniques such as:

- Reducing the number of allocated Physical Resource Blocks (PRBs): Since power density per PRB is fixed, fewer PRBs mean lower Ptx.
- Lowering the power of the Physical Dedicated Shared Channel (PDSCH): As the PDSCH occupies most of the beamwidth, reducing its power significantly impacts Ptx.
- Reducing the PDSCH power, e.g., by lowering the modulation order reduces PDSCH power, thus affecting Ptx.

While reducing antenna gain Gtx is also an option, no optimization technique currently exists to minimize performance loss due to lower antenna gain.

One of the problems related to EIRP control is thus degradation of cell performance due to reduction of EIRP to ensure compliance with EMF exposure limits in the proximity of mMIMO transmission point, especially on the roof level mounted transmission points.

It has been observed that the narrow, directional beams of an antenna array, such as grid-of-beam beamforming, are broadened by channel angular spread. This results in degradation of effective beamforming gain, especially for edge users either indoors or in non-line-of-sight (NLOS) propagation conditions. Typically, the widening of the beam is much higher in the azimuth direction than in the elevation direction because more reflections and the spread of radio waves happen in the horizontal plane than in the vertical plane due to layout and objects placement in most outdoor propagation environments. Therefore, in a real radio channel it is possible to observe saturation of antenna beamforming gain, especially in azimuth with decreasing of horizontal beamwidth.

What the inventors have discovered is that by broadening the beamwidth of the antenna pattern, but still maintaining the same effective gain of the antenna seen by the user terminals before beam broadening leads to significant benefits when the resulting EMF is studied.

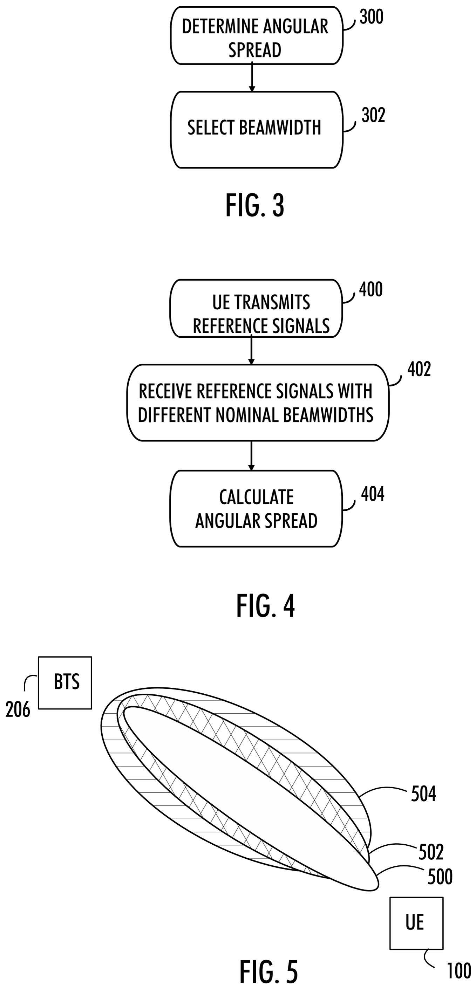

The flowchart of Fig. 3 illustrates an embodiment. The flowchart illustrates an example of an embodiment applied at the apparatus 100. In an embodiment, the apparatus may be a base station, a transmission point or a part of a base station or a transmission point. The apparatus may also be another network element.

In step 300, the apparatus is configured determine angular spread of a radio channel, wherein the determined angular spread is configured for use by a transmission point for transmission.

In step 302, the apparatus is configured to be based on the determined angular spread, select the beamwidth in at least one of an azimuth direction and an elevation direction of an antenna arrangement configured for use with the transmission point for transmission of the radio channel.

In an embodiment, apparatus is configured to determine the signal strength received by a user terminal communicating with the transmission point on the radio channel and minimizing the reduction in the signal strength when selecting the horizontal beamwidth.

In an embodiment, the proposed solution comprises two steps. First the angular spread of a radio channel used by a transmission point for transmission is determined.

Second, in an embodiment, if radio channel has sufficient angular spread so that the transmission beam may be broadened, then the beam is broadened, minimizing the reduction in the signal strength experienced by the user terminal receiving the beam.

The angular spread of a radio channel may be determined in various ways. The flowchart of Fig. 4 illustrates an embodiment.

In step 400, a user terminal transmits reference signals towards the direction of a transmission point.

In step 402, a transmission point receives reference signals and reconfigures nominal beamwidths and therefore changing the nominal antenna gain.

In step 404, the angular spread is determined based on the reference signals from different nominal beamwidth configurations.

Let us study an example of determining the angular spread.

In instances in which the channel angular spread, that is, azimuthal spread of departure ASD$\sigma_H$ and/or Zenith Spread of Departure ZSD$\sigma_V$, are unknown or time varying, the effective gain of a rectangular-shaped sub-array can be determined in real time based upon measured signal strength using for example three or more different sub-array configurations, as described below. For a uniform planar array of size (N1, N2), namely, a uniform planar array with N1 rows and N2 columns, the signal strength of the three sub-panels of size (n1, k1), (n1, k2) and (n2, k1) in which n1, n2 $\leq$ N1 and k1, k2 $\leq$ N2 can be measured. The effective gain G of the corresponding subarrays may be defined as:

$$G(n1, k1, \mathrm{B_{ve}}, \mathrm{B_{he}}, \sigma_v, \sigma_h) = \frac{2}{\sqrt{\left(\frac{\mathrm{B_{ve}}}{\mathrm{n1}}\right)^2 + \sigma_v^2}\sqrt{\left(\frac{\mathrm{B_{he}}}{\mathrm{k1}}\right)^2 + \sigma_h^2}}, \qquad (2)$$

$$G(n1, k2, \mathrm{B_{ve}}, \mathrm{B_{he}}, \sigma_v, \sigma_h) = \frac{2}{\sqrt{\left(\frac{\mathrm{B_{ve}}}{\mathrm{n1}}\right)^2 + \sigma_v^2}\sqrt{\left(\frac{\mathrm{B_{he}}}{\mathrm{k2}}\right)^2 + \sigma_h^2}}, \qquad (3)$$

$$G(n2, k1, \mathrm{B_{ve}}, \mathrm{B_{he}}, \sigma_v, \sigma_h) = \frac{2}{\sqrt{\left(\frac{\mathrm{B_{ve}}}{\mathrm{n2}}\right)^2 + \sigma_v^2}\sqrt{\left(\frac{\mathrm{B_{he}}}{\mathrm{k1}}\right)^2 + \sigma_h^2}}. \qquad (4)$$

where the nominal beamwidths B of the antenna elements having a gain of Ge may be represented as $B_{ve}$ and $B_{he}$ in the vertical and horizontal directions, respectively.

The combination of equations (2) and (3) results in the following:

$$\frac{G(n1,k1,B_{ve},B_{he},\sigma_v,\sigma_h)}{G(n1,k2,B_{ve},B_{he},\sigma_v,\sigma_h)}=\frac{G(n1,k1)}{G(n1,k2)}=\frac{\sqrt{\left(\frac{B_{ve}}{n1}\right)^2+\sigma_v^2}\sqrt{\left(\frac{B_{he}}{k2}\right)^2+\sigma_h^2}}{\sqrt{\left(\frac{B_{ve}}{n1}\right)^2+\sigma_v^2}\sqrt{\left(\frac{B_{he}}{k1}\right)^2+\sigma_h^2}}$$

$$=\frac{\sqrt{\left(\frac{B_{he}}{k2}\right)^2+\sigma_h^2}}{\sqrt{\left(\frac{B_{he}}{k1}\right)^2+\sigma_h^2}}, \tag{5}$$

which provides the following:

$$\left[\frac{G^2(n1,k2)}{G^2(n1,k1)}-1\right]\left(\frac{\sigma_h}{B_{he}}\right)^2=\frac{1}{(k1)^2}-\frac{G^2(n1,k2)}{(k2)^2\,G^2(n1,k1)}, \tag{6}$$

An estimate of the normalized ASD, in its squared form, may then be defined as:

$$\left(\frac{\sigma_h}{B_{he}}\right)^2=\frac{1/(k1)^2-G^2(n1,k2)/G^2(n1,k1)/(k2)^2}{G^2(n1,k2)/G^2(n1,k1)-1}. \tag{7}$$

The estimate of the normalized ZSD in the vertical direction may be calculated in a similar manner.

Another way of determining the angular spread is illustrated in Fig. 5.

A base station 206 transmits Channel State Information reference signal (CSI-RS) beams 502, 504 with different beamwidths and nominal antenna gains towards the direction of current traffic beam 500.

The base station receives the report from user terminal 100 and decides if traffic beam can be broadened. The base station may determine that the angular spread is large enough to enable broadening the beamwidth if the measurement reports indicate that the signal strength received by the user terminal remains similar regardless of the beamwidth of the reference signal.

Let us study the effective antenna gain.

Effective antenna gain affected by angular spread in the real channel can be estimated from the following formulas:

$$g_{\max}=NG_e=\frac{2}{B_hB_v} \tag{8}$$

where:

N is the number of antenna elements; Ge is the antenna element gain. $B_h$, $B_v$ are RMS antenna beamwidth in azimuth and elevation, measured in radians, and they may be defined as

$$B_v=\sqrt{B_{v0}^2+\sigma_v^2},\;\; B_h=\sqrt{B_{h0}^2+\sigma_h^2} \tag{9}$$

where:

$\sigma_v$, $\sigma_h$ are angular spread in elevation and azimuth (in radians) and
$B_{v0}$, $B_{h0}$ are nominal RMF antenna beamwidths in elevation and azimuth (radians).

The nominal RMS antenna beamwidth can be computed from the formula below which is valid for beams with gaussian shape:

$$\text{Bv0} = \text{HPBW}_V/(2\text{*sqrt(ln(4))} \ , \ \text{Bh0} = \text{HPBW}_H/(2\text{*sqrt(ln(4))} \quad (10)$$

where $\text{HPBW}_V$ and $\text{HPBW}_H$ are half-power beamwidths in elevation (vertical) and azimuth (horizontal) directions respectively.

Based on equations (8) and (9) it can be concluded that the effective gain of antenna is decreasing when angular spread is close to or higher than nominal RMS antenna beamwidth.

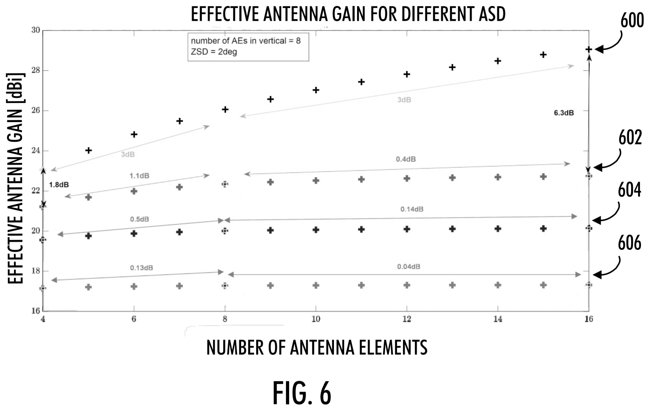

Fig. 6 illustrates effective antenna gain for different horizontal angular spread values. On x-axis is the number of antenna elements in horizontal direction (azimuth beamwidth change). On y-axis is effective antenna gain in dBi. The figure shows effective antenna gain as a function of antenna elements with horizontal angular spread of 0 degrees 600, 7.5 degrees 602, 14 degrees 604 and 27 degrees 606. Number of antenna elements in vertical direction is 8 and vertical angular spread assumed to be 2 degrees.

Fig. 6 values are calculated utilising the equations (8) - (10) above for Urban Macro non line-of-sight, UMa NLOS, statistical channel model.

It can be noted that for typical angular spreads in UMa NLOS channel the increasing number of antenna elements in horizontal direction does not lead to the significant increase of the effective gain. Graph 600 of Fig. 6 has the nominal antenna gain (ASD=0 degrees) which is valid only close to base station where EMF exposure needs to be controlled.

Based on Fig. 6 it can be noted that for example for ASD=7.5 degrees 602, if the transmission beam is broadened by decreasing the number of antenna elements from 16 to 8, which results in the broadening of the beam by 2 times, the nominal antenna gain close to the base station will be reduced by 3dB. Therefore, the EIRP will reduce by 3dB, but in the location of user terminal (according to 3GPP UMa model 80% of UEs are indoor and NLOS) the effective gain will reduce only by 0.4dB. Thus, the impact of beam broadening on the level strength received by the user terminal and hence throughput is minimal.

In the example of 27 degrees of ASD 606, broadening the beam 4 times (corresponding to decreasing the number of antenna elements from 16 to 4) a 6 dB nominal antenna gain and EIRP reduction is achieved. However, the effective gain is almost the same (small reduction only by 0.17 dB).

Thus, it can be noted that broadening the beam is an effective tool for reducing the EIRP but the reduction in the signal strength is minimal.

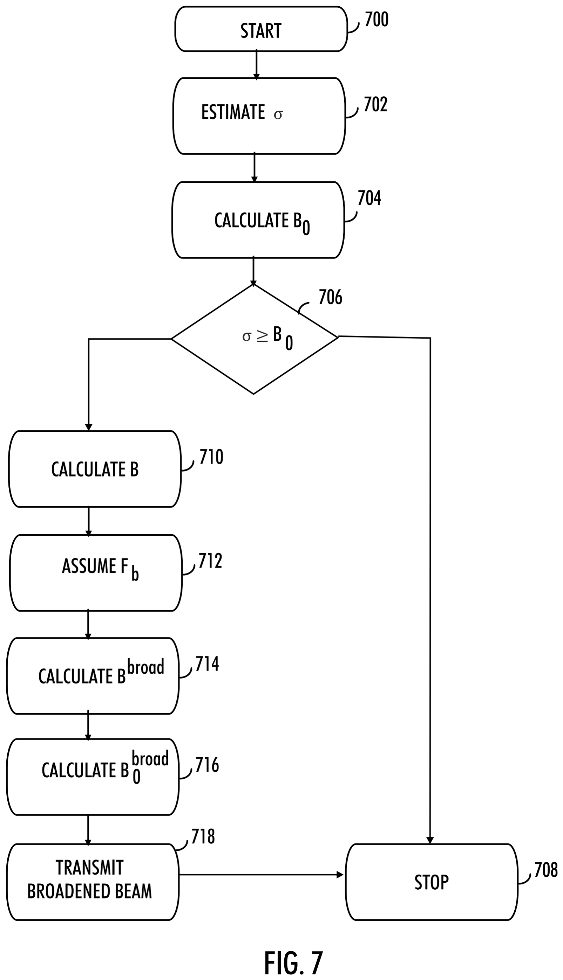

Fig. 7 is a flow chart illustrating an embodiment. The chart illustrates the operation of a base station or transmission point. The operation starts at step 700.

In step 702, RMS angular spread of departure $\sigma$ (either azimuth or zenith - ASD or ZSD) in radians is estimated.

In step 704, initial nominal RMS beamwidth $B_0$ in radians is calculated:

$$B_0 = \frac{HPBW}{2\sqrt{ln4}} \quad\quad\quad (11)$$

where HPBW is initial nominal half-power beamwidth in radians.

In step 706, it is checked whether the RMS angular spread of departure $\sigma$ is greater or equal to initial nominal RMS beamwidth $B_0$. If this is not the case, the radio channel has not sufficient angular spread so that the transmission beam may be broadened. Thus, the operation stops 708.

If the radio channel has sufficient angular spread so that the transmission beam may be broadened, i.e. if $\sigma \geq B_0$, then the process continues by calculating 710 initial effective RMS beamwidth B in radians:

$$B = \sqrt{B_0^2 + \sigma^2}. \quad\quad\quad (12)$$

In step 712, a broadening factor or multiplication factor $F_b$ is selected. Typically, the broadening factor takes values higher than 1.

In step 714, broadened effective RMS beamwidth $B^{broad}$ in radians is calculated:

$$B^{broad} = BF_b \quad\quad\quad (13)$$

In step 716, broadened nominal RMS beamwidth $B_0^{broad}$ in radians is calculated:

$$B_0^{broad} = \sqrt{(B^{broad})^2 - \sigma^2} \qquad\qquad (14)$$

Finally in step 718, the transmission beam is transmitted using the broadened nominal RMS beamwidth $B_0^{broad}$.

We can study a non-limiting numerical example in Urban Macro UM channel, 3.5 GHz. A user terminal is in NLOS conditions at 300 m from the base station. Let us assume that the RMS angular spread of departure $\sigma = 0.48$ rad. The initial nominal gain is 25.1 dBi and HPBW is 14 degrees. Thus, the initial nominal RMS beamwidth $B_0$ is calculated to be $B_0 = 0.1$ rad. In this case $\sigma \geq B_0$, then the process continues by calculating initial effective RMS beamwidth $B = 0.49$ rad and corresponding initial effective gain is 17.8 dBi.

The broadening factor or multiplication factor $F_b$ is selected to be a 10% increase in beamwidth, i.e., $F_b = 1.1$

Next the broadened effective RMS beamwidth $B^{broad}$ is calculated $B^{broad} = 0.54$ rad. Broadened effective gain is 17.4 dBi.

Next, the broadened nominal RMS beamwidth $B_0^{broad}$ is calculated: $B_0^{broad} = 0.25$ rad. Here broadened nominal gain is 21.3 dBi and HPBW is 33 degrees.

In this example the beam has nominal pattern broadened from 14 degrees to 33 degrees, which reduced the nominal gain (EIRP) by 3.8 dB, whereas the effective gain (SNR at user terminal position) has been reduced only by 0.4 dB.

The broadening the beam may be realised in many ways. Known ways of broadening the beam are based on phase tapering, amplitude tapering or a combination of these.

A simple method to achieve beam widening involves transmitting signals from only a subset of antenna ports. In the most extreme scenario, just one sub element of the entire antenna array may be used to create the beam.

The above is a specific instance of amplitude tapering, where the amplitudes and phases of the weight vectors of the antenna array can be adjusted. Different beam broadening functions may be applied, as one skilled in the art is aware.

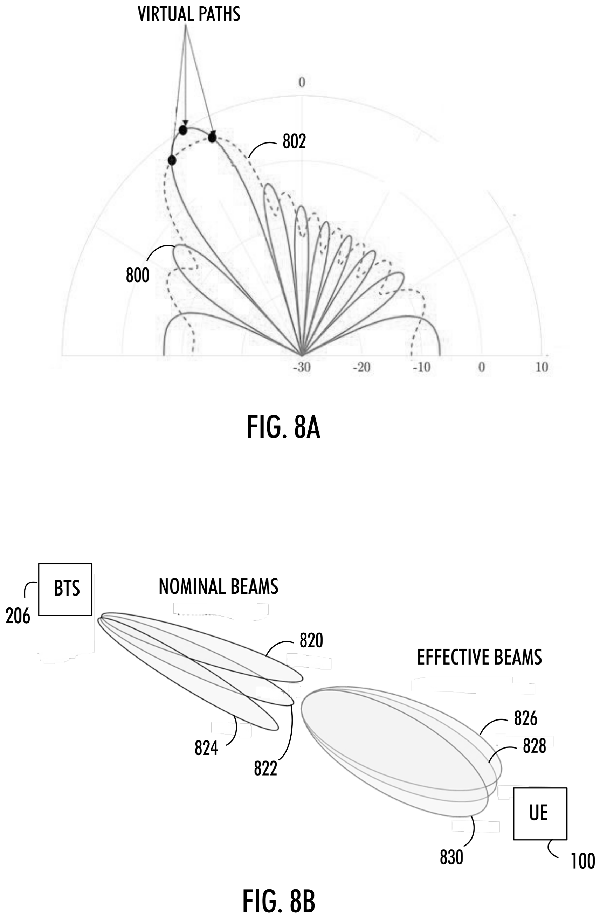

Another solution is calculating antenna weights based on the Maximum Ratio Transmission (MRT) technique with virtual multi-paths. Fig. 8A illustrates an example. Solid line 800 is original pattern and hashed line 802 illustrates MRT virtual multi-path.

First is calculated an array response with three virtual paths one located in the center of the beam and two located at two half-power beamwidths of the beam.

Then channel response H with equal phase shifts for all virtual paths is calculated.

Third, MRT precoding weights $\dfrac{H^*}{norm\,(H)}$ are generated. These weights are then used in transmitting the broadened beam.

In the example of Fig. 8A the virtual paths were placed on the center of the original pattern and angles on half-power beamwidths of this pattern. The calculated antenna weights using MRT for these 3 paths gives the pattern with wider beam and gain lower by 2.7 dB. If a broader beam is required virtual paths should be placed at more distant angles from the center angle.

In an embodiment, the broadened beam may be obtained by a selection of beam from a grid of beams which take into account also EIRP constraints towards given segment but maintaining similar signal level for the user terminal.

In this method during selection of beam from the codebook it is considered also that effective beam is wider in real channel based on estimation of angular spread above. Therefore, another beam which is close to the best beam can be selected. Another neighbouring beam can be selected which guarantee lower EIRP close to antenna in the main beam center direction but minimize received signal level reduction at user terminal position.

Fig. 8B illustrates an example with nominal beams 820, 822, 824 and effective beams 826, 828, 830. In the example of Fig. 8B, beam 828 is the best beam selected from the codebook but beam 820 guarantees lower EIRP and therefore lower exposure just below the base station 206. On the user terminal 100 side due to beam widening in the real channel the received signal level is reduced only slightly as compared to beam 822 so impact of beam change on downlink signal to noise ratio is minimized.

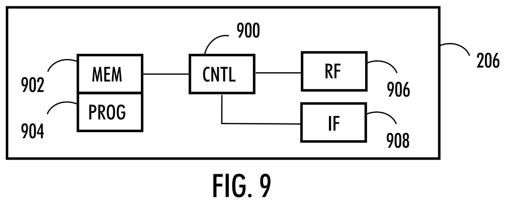

Fig. 9 illustrates an embodiment. The figure illustrates a simplified example of an apparatus applying embodiments of the invention. It should be understood that the apparatus is depicted herein as example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities. In an embodiment, the apparatus is a base station 206, a network element or a part of a base station or network element.

The apparatus may be realised in various ways depending on which telecommunication infrastructure type is targeted and in which segment of the targeted infrastructure.

The apparatus 206 of the example includes a control circuitry 900 configured to control at least part of the operation of the apparatus.

The apparatus may comprise a memory 902 for storing data. Furthermore, the memory may store software 904 executable by the control circuitry 900. The memory may be integrated in the control circuitry.

The apparatus may comprise one or more interface circuitries 906, 908. The interface circuitries are operationally connected to the control circuitry 900. In an embodiment, an interface circuitry 906 may be a set of transceivers configured to communicate wirelessly with terminal devices or user equipment. The interface circuitry may be connected to an antenna arrangement (not shown). The apparatus may also comprise a connection to a transmitter instead of a transceiver. The apparatus may further comprise other interfaces 908 configured to communicate with other network elements in the core network, base stations or other network elements of a wireless communication network, for example.

In an embodiment, the software 904 may comprise a computer program comprising program code means adapted to cause the control circuitry 900 of the apparatus to realise at least some of the embodiments described above.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, processing system or a circuitry which may comprise a working memory (random access memory, RAM), a central processing unit (CPU), and a system clock. The CPU may comprise a set of registers, an arithmetic logic unit, and a controller. The processing system, controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

It will be obvious to a person skilled in the art that, as the technology advances, the inventive concept can be implemented in various ways. The invention and its embodiments are not limited to the examples described above but may vary within the scope of the claims.

**Claims**

1. An apparatus, comprising:
   at least one processor; and at least one memory storing instructions that, when executed by the at least one processor, cause the apparatus at least to:

determine angular spread of a radio channel, wherein the determined angular spread is configured for use by a transmission point for transmission;

and based on the determined angular spread, select the beamwidth in at least one of an azimuth direction or an elevation direction of an antenna arrangement configured for use with the transmission point for transmission of the radio channel;

determine a nominal root mean square beamwidth of the antenna arrangement;

compare the determined nominal root mean square beamwidth to the determined angular spread and in response to the angular spread being larger or equal to the determined nominal root mean square beamwidth;

calculate an effective root mean square beamwidth;

select a broadening factor;

calculate a broadened effective root mean square beamwidth by multiplying the effective root mean square beamwidth with the broadening factor;

calculate a squared broadened effective root mean square beamwidth by squaring the broadened effective root mean square beamwidth;

calculate a squared angular spread by squaring the determined angular spread,

calculate a broadened nominal root mean square beamwidth as a square root of the squared angular spread subtracted from the squared broadened effective root mean square beamwidth; and

apply the broadened nominal root mean square beamwidth in transmission.

2. The apparatus of claims 1, the at least one memory and the instructions configured to, with the at least one processor, cause the apparatus further to:

receive reference signals with different nominal beamwidths from the direction of a user terminal communicating with a transmission point on the radio channel;

determine the angular spread based on the reference signals.

3. The apparatus of claim 2, the at least one memory and the instructions configured to, with the at least one processor, cause the apparatus further to:
determine that the determined angular spread is large enough to enable broadening the beamwidth in response to the reference signals indicating that the signal strength received by the user terminal remains similar regardless of the beamwidth of the reference signal.

4. The apparatus of claim 1, the at least one memory and the instructions configured to, with the at least one processor, cause the apparatus further to:

selecting a first plurality of antenna elements of the antenna arrangement and obtaining a measure of a first signal based upon transmission or reception of a signal by the first plurality of antenna elements.

selecting a second plurality of antenna elements of the antenna arrangement and obtaining a measure of a second signal based upon transmission or reception of a signal by the second plurality of antenna elements.

selecting a third plurality of antenna elements of the antenna arrangement and obtaining a measure of a third signal based upon transmission or reception of a signal by the third plurality of antenna elements, wherein the first, second and third plurality of antenna elements are each different selections of the plurality of antenna elements of the active antenna array;

determining the angular spread based on the measures of the first, second and third signals.

5. The apparatus of claim 4, the at least one memory and the instructions configured to, with the at least one processor, cause the apparatus further to:

determining beamforming gains based upon the measures of the first, second and third signals; and

estimating angular spread based at least in part upon the beamforming gains.

6. The apparatus of any previous claim, the at least one memory and the instructions configured to, with the at least one processor, cause the apparatus further to:
control transmission of a broadened beam by applying at least one of phase tapering and amplitude tapering to the transmitted signal.

7. The apparatus of any previous claim, the at least one memory and the instructions configured to, with the at least one processor, cause the apparatus further to:

> control transmission of a broadened beam by
> calculating an array response with three virtual paths, one located in center of the beam and two located at half-power beamwidths of the beam g;
> calculate a channel response H with equal phase shifts for all virtual paths and
> generate maximum ratio transmission precoding weights based on the channel response; and
> apply the weights when transmitting the broadened beam.

8. A method performed by a network node in a communication system comprising:

> determining angular spread of a radio channel, wherein the determined angular spread is configured for use by a transmission point for transmission;
> and based on the determined angular spread, selecting the beamwidth in at least one of an azimuth direction or an elevation direction of an antenna arrangement configured for use with the transmission point for transmission of the radio channel;
> determining nominal root mean square beamwidth of the antenna arrangement;
> comparing the determined beamwidth to the determined angular spread and in response to the angular spread being larger or equal to the determined beamwidth;
> calculating effective root mean square beamwidth;
> selecting a broadening factor;
> calculating broadened effective root mean square beamwidth by multiplying the effective root mean square beamwidth with the broadening factor;
> calculating a squared broadened effective root mean square beamwidth by squaring the broadened effective root mean square beamwidth;
> calculating a squared angular spread by squaring the determined angular spread,
> calculating a broadened nominal root mean square beamwidth as a square root of the squared angular spread subtracted from the squared broadened effective root mean square beamwidth; and
> applying the broadened effective RMS beamwidth in transmission.

9. The method of claim 8, further comprising:

> receiving reference signals with different nominal beamwidths from the direction of a user terminal communicating with a transmission point on the radio channel;
> determine the angular spread based on the reference signals.

10. The method of claim 9, further comprising:
determining that the angular spread is large enough to enable broadening the beamwidth in response to the reference signals indicating that the signal strength received by the user terminal remains similar regardless of the beamwidth of the reference signal.

11. The method of any previous claim 8 to 10, further comprising:
control transmission of a broadened beam by applying at least one of phase tapering or amplitude tapering to the transmitted signal.

12. The method of any previous claim 8 to 10, further comprising:

> controlling transmission of a broadened beam by
> calculating an array response with three virtual paths, one located in center of beam and two located at half-power beamwidths of the beam;
> calculating channel response H with equal phase shifts for all virtual paths is calculated and
> generating maximum ratio transmission precoding weights based on the channel response; and
> applying the weights when transmitting the broadened beam.

13. A computer program comprising instructions, which, when executed by an apparatus, cause the apparatus to perform at least the following:

determining angular spread of a radio channel, wherein the determined angular spread is configured for use by a transmission point for transmission;

and based on the determined angular spread, selecting the beamwidth in at least one of an azimuth direction or an elevation direction of an antenna arrangement configured for use with the transmission point for transmission of the radio channel;

determining nominal root mean square beamwidth of the antenna arrangement;

comparing the determined beamwidth to the determined angular spread and in response to the angular spread being larger or equal to the determined beamwidth;

calculating effective root mean square beamwidth;

selecting a broadening factor;

calculating broadened effective root mean square beamwidth by multiplying the effective root mean square beamwidth with the broadening factor;

calculating a squared broadened effective root mean square beamwidth by squaring the broadened effective root mean square beamwidth;

calculating a squared angular spread by squaring the determined angular spread,

calculating a broadened nominal root mean square beamwidth as a square root of the squared angular spread subtracted from the squared broadened effective root mean square beamwidth; and

applying the broadened effective RMS beamwidth in transmission.

14. The apparatus of any of claims 1 to 7, wherein the apparatus is a base station.

15. The apparatus of any of claims 1 to 7, wherein the apparatus is a part of a base station.

FIG. 1

FIG. 2

DETERMINE ANGULAR SPREAD  300

SELECT BEAMWIDTH  302

FIG. 3

UE TRANSMITS REFERENCE SIGNALS  400

RECEIVE REFERENCE SIGNALS WITH DIFFERENT NOMINAL BEAMWIDTHS  402

CALCULATE ANGULAR SPREAD  404

FIG. 4

BTS

206

504

502

500

UE

100

FIG. 5

FIG. 6

**FIG. 7**

Flowchart elements:
- 700 — START
- 702 — ESTIMATE $\sigma$
- 704 — CALCULATE $B_0$
- 706 — $\sigma \geq B_0$
- 710 — CALCULATE B
- 712 — ASSUME $F_b$
- 714 — CALCULATE $B^{broad}$
- 716 — CALCULATE $B_0^{broad}$
- 718 — TRANSMIT BROADENED BEAM
- 708 — STOP

VIRTUAL PATHS

802

800

0

-30    -20    -10    0    10

**FIG. 8A**

BTS

206

NOMINAL BEAMS

820

824

822

EFFECTIVE BEAMS

826

828

UE

830

100

**FIG. 8B**

FIG. 9

**EUROPEAN SEARCH REPORT**

Application Number

EP 25 22 3201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/200146 A1 (DU JINFENG [US] ET AL) 23 June 2022 (2022-06-23) * abstract * * paragraph [0057] - paragraph [0101] * * figures 1-12 * | 1-15 | INV. H04B7/06 |
| X | US 2023/328541 A1 (DU JINFENG [US] ET AL) 12 October 2023 (2023-10-12) * abstract * * paragraph [0110] - paragraph [0130] * * figures 1-6 * | 1-15 | |
| X | JINFENG DU ET AL: "Matching in the Air: Optimal Analog Beamforming under Angular Spread", ARXIV.ORG CORNELL UNIVERSITY LIBRARY, 201 OLIN LIBRARY CORNELL UNIVERSITY ITHACA, NY 14853, 24 October 2019 (2019-10-24), XP081520142, * sections III, V * | 1-15 | |
| X | BECHTA KAMIL ET AL: "Optimized Antenna Array for Improving Performance of 5G mmWave Fixed Wireless Access in Suburban Environment", 2019 IEEE 2ND 5G WORLD FORUM (5GWF) IEEE, 30 September 2019 (2019-09-30), pages 376-381, XP033665228, DOI: 10.1109/5GWF.2019.8911630 [retrieved on 2019-11-25] * section II * | 1-15 | TECHNICAL FIELDS SEARCHED (IPC) H04B |

The present search report has been drawn up for all claims

| Place of search | Date of completion of the search | Examiner |
|---|---|---|
| Munich | 20 April 2026 | Garrammone, Giuliano |

EPO FORM 1503 03.82 (P04C01)

## ANNEX TO THE EUROPEAN SEARCH REPORT
## ON EUROPEAN PATENT APPLICATION NO.

EP 25 22 3201

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2026

| Patent document cited in search report | | Publication date | Patent family member(s) | | Publication date |
|---|---|---|---|---|---|
| US 2022200146 | A1 | 23-06-2022 | CN | 114223146 A | 22-03-2022 |
| | | | EP | 3956997 A1 | 23-02-2022 |
| | | | US | 2022200146 A1 | 23-06-2022 |
| | | | WO | 2020212730 A1 | 22-10-2020 |
| US 2023328541 | A1 | 12-10-2023 | CN | 116915295 A | 20-10-2023 |
| | | | EP | 4262103 A1 | 18-10-2023 |
| | | | US | 2023328541 A1 | 12-10-2023 |

EPO FORM P0459

For more details about this annex : see Official Journal of the European Patent Office, No. 12/82